# FASCICULE DE BREVET EUROPEEN

(11) **EP 0 847 784 B1**
(45) Date de publication et mention de la délivrance du brevet: **04.05.2005**
(21) Numéro de dépôt: 97402980.3
(22) Date de dépôt: 10.12.1997
(51) Int. Cl.: B01D 39/00, B01J 20/28, B01D 39/18

(54) **Papier de filtration de liquides, apte à filtrer des suspensions ou des émulsions riches en graisses ou en paraffines**
Papier zur Filtration von Flüssigkeiten geeignet zur Filtration von mit Fetten oder Paraffinen schwerbeladenen Suspensionen oder Emulsionen
Paper for filtration of liquids suitable for filtering suspensions or emulsions heavily loaded with fats or paraffins

(30) Priorité: 12.12.1996 FR 9615294
(43) Date de publication de la demande: 17.06.1998
(73) Titulaire: TotalFinaElf France, 92800 Puteaux (FR); Ahlstrom Industries SA, 94400 Vitry sur Seine Cedex (FR)
(72) Inventeur: Navarre, François-Pierre, 69260 Charbonnière Les Bains (FR); Bossand, Bernard, 69360 Communay (FR); Girard, Pierre, 38330 Saint Ismier (FR); Dussaud, Joseph, 38780 Pont-Evêque (FR)
(74) Mandataire: Jolly, Jean-Pierre

(56) Documents cités:
- EP-A- 0 159 377
- WO-A-95/18265
- FR-A- 2 216 377
- FR-A1- 2 307 765
- GB-A- 2 024 886
- PATENT ABSTRACTS OF JAPAN vol. 15, no. 177 (C-0829) & JP 03 042008 A (SUNTORY)
- PATENT ABSTRACTS OF JAPAN vol. 011, no. 089 (C-411) 19 Mars 1987 & JP 61 242 685 A (SUMITOMO METAL IND LTD) 28 Octobre 1986
- DATABASE WPI Section Ch, Week 197825, Derwent Publications Ltd., London, GB; Class J01, AN 1978-45030A & JP 53 053 069 A (HITACHI LTD) 15 Mai 1978

## Description

### DOMAINE TECHNIQUE

La présente invention concerne un papier de filtration de liquides chargés, à f orte capacité d'adsorption et d'absorption présentant une porosité élevée, à base de fibres cellulosiques naturelles et/ou synthétiques comportant en outre des matières organiques pulvérulentes. Il peut comporter également des matières pulvérulentes inorganiques et des agents bactéricides et/ou virocides.

Elle trouve son application dans les industries de traitement du pétrole brut, les industries qui utilisent des huiles de lubrification, des fluides d'usinage, les papeteries, les industries agro-alimentaires et d'une manière générale toutes les industries qui produisent des suspensions ou émulsions riches en graisses ou paraffines. Elle trouve également son application dans la filtration des eaux usées produites par les foyers domestiques et les collectivités.

### ETAT DE LA TECHNIQUE ANTERIEURE

Les papiers à base de fibres synthétiques ou naturelles utilisées dans de nombreuses applications pour filtrer des liquides sont bien connus. Ils présentent certains inconvénients pour les applications industrielles, en raison notamment de leurs faibles porosités qui entraînent des vitesses de filtration médiocres exprimées en volume de liquide traité par unité de temps et par unité de surface.

Les papiers ont des capacités d'adsorption et de réactivité insignifiantes et ils ne permettent pas de fixer des produits tels que les phénols même en très faibles quantités dans les liquides traités.

Les papiers connus sont inefficaces pour filtrer des suspensions très stables dont la stabilité résulte de la présence d'agents tensioactifs et n'ont aucun pouvoir désodorisant.

De plus, ils sont inaptes au traitement de liquides à une température supérieure à 90°C.

Il est également connu d'utiliser des papiers chargés avec du talc ou de la bentonite, qui ont une capacité hydraulique inférieure à celle du papier non chargé.

Le document WO-95/18265A décrit un papier de filtration à base de fibres cellulosique pouvant être chargé avec du charbon actif. Le papier de ce document est employé dans la filtration d'eau potable et de boissons, ainsi que dans le domaine pharmaceutique et le traitement de l'air.

### DESCRIPTION DE L'INVENTION

L'invention a justement pour but de remédier à ces inconvénients. A cette fin elle propose un papier de filtration de liquides, apte à filtrer des suspensions ou des émulsions riches en graisses ou en paraffines, ce papier à forte capacité d'adsorption et d'absorption et à porosité élevée étant à base de fibres cellulosiques et comportant en outre au moins une matière organique pulvérulente dont au moins 95% des particules ont une granulométrie comprise entre 1 et 150 microns, dans une proportion comprise entre 5 et 75% du poids du papier incluant ladite matière organique, un charbon actif étant présent dans cette matière organique, le papier de filtration étant caractérisé en ce que le charbon actif est constitué d'au moins un coke micronisé choisi parmi les cokes de charbon, les cokes de pétrole et les cokes de lignites.

Selon une autre caractéristique de l'invention, le coke micronisé constituant le charbon actif a une granulométrie comprise entre 5 et 50 microns, dans une proportion comprise de préférence entre 5 et 70% du poids du papier incluant ladite matière organique.

Selon une autre caractéristique de l'invention, la matière organique comprend un bois torréfié micronisé de granulométrie comprise entre 50 et 150 microns.

Selon une autre caractéristique de l'invention, la matière organique comprend une poudre de résineux.

Selon une autre caractéristique, le papier de l'invention comporte en outre au moins un matériau inorganique dans une proportion de 0,2 à 70% du poids du papier incluant ladite matière organique et ledit matériau inorganique.

Selon une autre caractéristique de l'invention, le matériau inorganique est un produit dérivé de la silice, sous forme de poudre.

Selon une autre caractéristique de l'invention, le matériau inorganique est un produit dérivé de l'alumine, sous forme de poudre.

Selon une autre caractéristique de l'invention, le matériau inorganique est un catalyseur pulvérulent de granulométrie comprise entre 2 et 100 microns.

Selon une autre caractéristique, le papier de l'invention comporte en outre un agent modificateur de pH.

Selon une autre caractéristique, le papier de l'invention comporte en outre un agent bactéricide.

Selon une autre caractéristique, le papier de l'invention comporte en outre un agent virocide.

Selon une autre caractéristique, le papier de l'invention a subi un traitement pour le rendre oléophile.

Selon une autre caractéristique, le papier de l'invention a subi un traitement pour le rendre hydrophobe.

D'autres caractéristiques et avantages de l'invention apparaîtront mieux à la lecture de l'exposé détaillé et des exemples qui vont suivre.

### EXPOSE DETAILLE DE L'INVENTION

L'invention a pour objet un papier filtrant chargé, réalisé à partir de fibres cellulosiques naturelles et/ou artificielles auxquelles sont ajoutées des matières organiques sous forme de poudres pour améliorer sa capacité hydraulique sans dégrader sensiblement les autres caractéristiques.

Ce résultat est illustré par le tableau suivant :

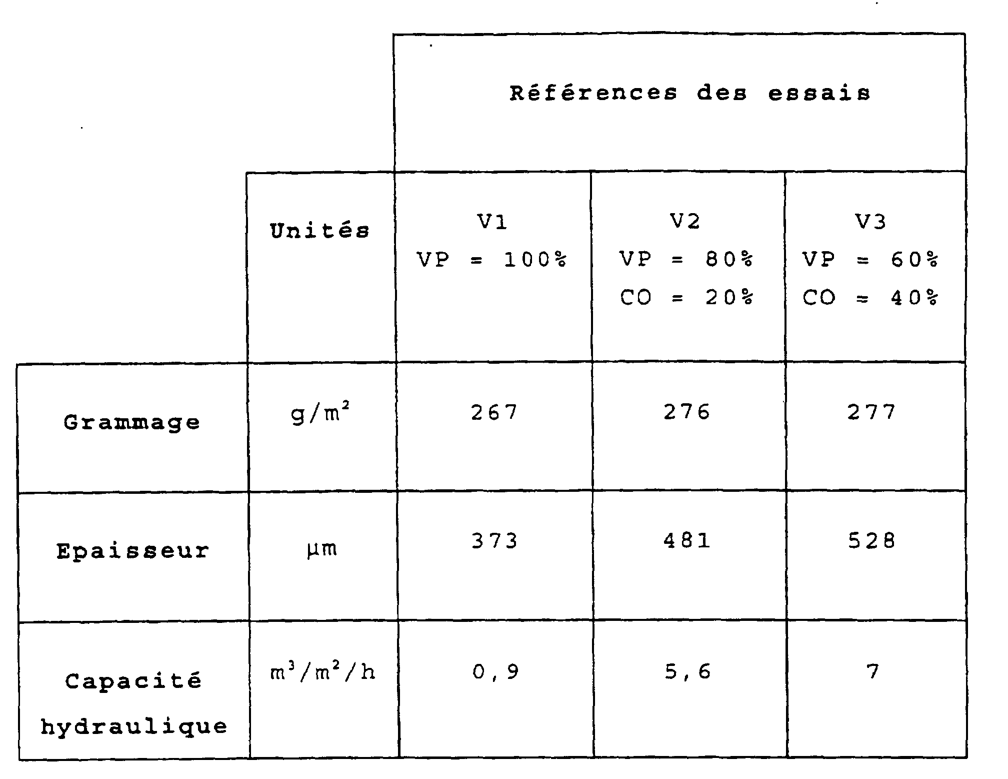

Dans lequel :
- V1, V2, V3 sont trois variantes de composition du papier.
- VP signifie vieux papiers récupérés constituant les fibres cellulosiques
- CO signifie charge organique, dans cet exemple de la poudre d'épicéa de granulométrie inférieure à 150 microns.
- la capacité hydraulique est le débit d'eau en mètres cubes par heure et par mètre carré de surface du papier, mesurée à 25°C.

Pour observer les effets de diverses charges sous forme de poudre on a effectué cinq essais dont les résultats sont les suivants :

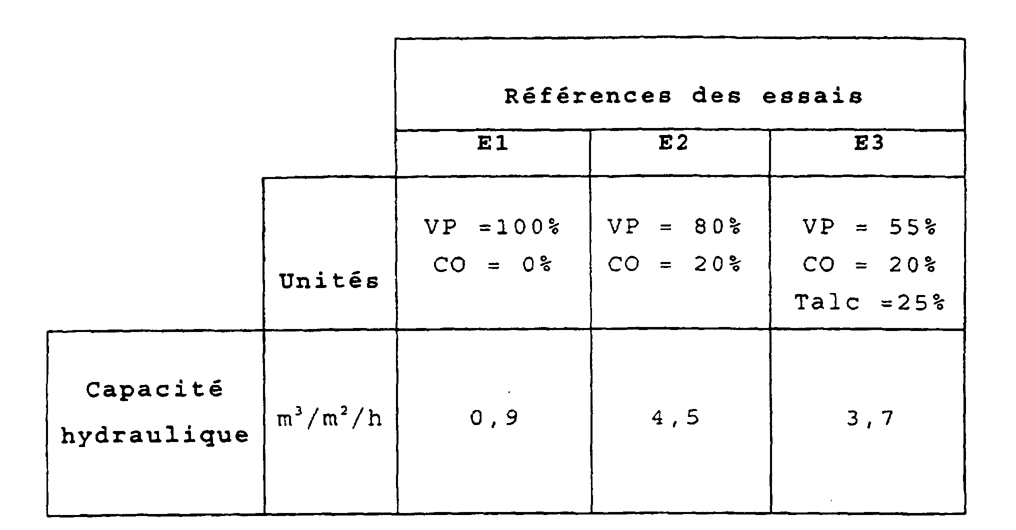

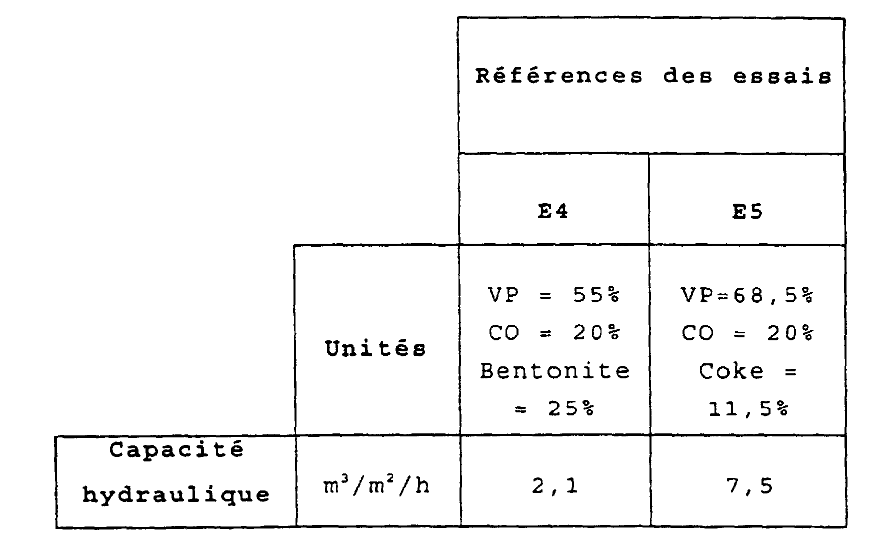

Dans lequel :
- E1, E2, E3, E4 et E5 sont les références des cinq essais.
- VP signifie vieux papiers récupérés constituant les fibres cellulosiques.
- CO signifie charge organique, dans cet exemple de la poudre d'épicéa de granulométrie inférieure à 150 microns.
- la capacité hydraulique est le débit d'eau en mètres cubes par heure et par mètre carré de surface du papier, mesurée à 25°C.

En comparant les résultats des essais E1 et E2 on constate que le fait de charger le papier avec une poudre organique a pour effet d'augmenter la capacité hydraulique du papier.

L'adjonction de talc ou de bentonite représentée par les essais E3 et E4 produit l'effet contraire, c'est à dire que la capacité hydraulique diminue.

Quand on charge le papier de l'essai E2 avec du coke de charbon présentant une granulométrie inférieure à 150 microns la capacité hydraulique passe de 4,5 à 7,5 m3/m2/heure.Ces résultats montrent que le papier de l'invention est un matériau filtrant dont on peut adapter les caractéristiques au liquide à filtrer, en agissant sur sa composition en qualité et en quantité.

Le papier de l'invention est utilisable comme média filtrant avec des dispositifs connus mettant en oeuvre des procédés connus. A titre d'exemple on peut citer les filtres à bande à déroulement de papier dans lesquels les matières solides en suspension dans le liquide à filtrer sont retenues sur le papier pour former un gâteau, certains produits sont adsorbés dans la poudre qui charge le papier et le filtrat constitué des éléments liquides coalescés est recueilli.

Le papier de l'invention peut aussi être mis en oeuvre au moyens de filtres connus du type rotatif sous vide.

Selon une autre caractéristique de l'invention la charge en matière organique du papier de filtration comprend au moins un charbon actif de granulométrie comprise entre 5 et 50 microns.

A titre d'exemple on peut citer les charbons actifs obtenus dans des fours à partir de végétaux tels que les noix de coco, les noyaux d'olives et le liège. Ces charbons actifs sont micronisés et représentent de préférence 5 à 70% du poids des fibres cellulosiques.

Le faible diamètre des pores de ces matériaux de l'ordre de 25 A° augmente le pouvoir adsorbant du papier.

Le papier chargé en poudre de charbon actif est particulièrement adapté à la filtration des suspensions et eaux peu chargées. Il a l'avantage de retenir les hydrocarbures aromatiques notamment le benzène, ainsi que les produits organiques des soudes usées, les pesticides et les produits organochlorés détergents.

Lorsqu'une capacité hydraulique très élevée est recherchée on utilise comme matière organique pour charger les fibres de papier, des cokes de lignite ou de pétrole micronisés, dans des proportions comprises entre 15 et 40% du poids de papier. Ces cokes présentent des surfaces spécifiques élevées de l'ordre de 100 à 300 m²/g qui confèrent au papier de bonnes capacités d'adsorption.

De plus le papier chargé avec des charbons actifs présente un coefficient de compressibilité de l'ordre de 0,3 ce qui le rend apte à supporter d'importantes variations de pression.

D'autres cokes peuvent être utilisés avantageusement du fait de leur faible coût, ce sont par exemple les poudres de liège carbonisé par les incendies de forêts.

Des papiers filtrants ayant des propriétés similaires sont obtenus en les chargeant avec des poudres de bois torréfiés et micronisés.

Selon une autre caractéristique de l'invention, le papier de filtration est chargé d'agents qui modifient son pH, par exemple du sulfate d'alumine, de l'acide sulfurique, des résines échangeuses d'ions.

Pour traiter des suspensions qui nécessitent des capacités d'échange d'ions ou des capacités élevées d'adsorption et d'absorption selon une autre caractéristique de l'invention on ajoute aux fibres cellulosiques des matières pulvérulentes minérales dérivées de la silice, telles que des silicates, de la silice naturelle ou des silicoaluminates cristallisés.

Selon une autre caractéristique de l'invention le papier est chargé de catalyseur usé de craqueur catalytique qui présente une surface spécifique de 10 m²/g et une porosité de 0,5 cm³/g et dont les caractéristiques granulométriques sont les suivantes :

| **Taille des particules de catalyseur en microns** | **Proportions en % Volume** |
|---|---|
| 0 - 40 | 10 |
| 40 - 80 | 55 |
| 80 - 105 | 20 |
| 105 - 150 | 10 |
| > 150 | 5 |

Une particularité intéressante de ce type de catalyseur est qu'il présente des pores de rayon moyen de l'ordre de 20 nanomètres qui sont de véritables pièges à molécules.

Le papier de filtration chargé en catalyseur de craqueur catalytique a aussi l'avantage de bien résister à des températures de mise en oeuvre de l'ordre de 100°C, d'être doté de propriétés oléophiles qui en font un bon coalesceur d'huiles et d'avoir une bonne résistance mécanique.

Une autre caractéristique de l'invention est que le papier chargé peut être traité de manière connue pour le rendre oléophobe, oléophile, ignifuge afin de l'adapter à la suspension à filtrer.

En fonction des besoins le papier chargé en poudres peut aussi comporter des agents bactéricides et/ou virocides. Ces agents peuvent être introduits lors de la fabrication du papier ou au moment de son utilisation par adsorption de produits bactéricides comme le formol et l'isotiasolidine ou par greffage chimique.

### EXEMPLE 1

La suspension traitée est une suspension houleuse d'origine pétrolière, ayant rempli une fonction de lubrification. Elle présente les caractéristiques suivantes :
. teneur en huile : 96%
. teneur en eau : 0,2%
. teneur en matières solides : 3,8% ( 3 à 100µm)
. couleur : noire
. viscosité : 78x10⁻⁶ m²/s à 40%
. densité : 0,893

Le papier filtrant utilisé comme média filtrant dans un filtre sous-vide a la composition suivante :
. fibre de papier recyclé : 50%
. poudre de bois résineux : 30%
. coke de charbon : 10%
. poudre de liège : 3%
. catalyseur de craqueur catalytique : 7%

La suspension a traiter est mélangée avec du LCO (Light Cycle Oil) issu d'un craqueur catalytique d'une raffinerie de pétrole brut, pour dissoudre les hydrocarbures lourds contenus dans la suspension et la rendre moins visqueuse.

Sous l'effet du vide l'huile de la suspension traverse les poudres chargées dans le papier filtrant. Les matières solides en suspension qui sont des particules de carbone ou des particules métalliques ou des produits de dégradation de l'huile et de ses additifs restent sur le papier et les poudres se saturent en hydrocarbures.

Le filtrat recueilli a les qualités suivantes :
. teneur en eau : indosable
. teneur en matières solides : indosable
. densité : 0,9
. viscosité : 23,6 x 10⁻⁶ m²/s à 40°C.

Ce filtrat est stable et constitue un bon carburant pour moteur diesel.

### EXEMPLE 2

La suspension traitée est une émulsion de paraffines dans l'eau ayant servie à un usinage de pièces métalliques.

Le papier filtrant chargé comprend les éléments suivants :
. fibres recyclées : 50 %
. poudres d'épicéa : 30 %
. poudres de liège : 5 %
. poudre de coke : 15 %

La granulométrie des poudres d'épicéa est comprise entre 10 et 150 microns. Celle des poudres de liège est comprise entre 5 et 20 microns. Celle du coke est comprise entre 100 et 150 microns.

Ce papier chargé est utilisé comme média filtrant sous vide. Sur le papier restent fixées les particules métalliques ainsi qu'une fraction des tensioactifs et la moitié des paraffines de l'émulsion. Le filtrat épuré peut être recyclé ou envoyé dans un décanteur ou l'on sépare l'eau de la paraffine.

La phase huile ne contient plus de traces de particules, elle peut donc être recyclée.

## Revendications

1. Papier de filtration de liquides, apte à filtrer des suspensions ou des émulsions riches en graisses ou en paraffines, ce papier à forte capacité d'adsorption et d'absorption et à porosité élevée étant à base de fibres cellulosiques et comportant en outre au moins une matière organique pulvérulente, dont 95% des particules ont une granulo-métrie comprise entre 1 et 150 microns, dans une proportion comprise entre 5 et 75% du poids du papier incluant ladite matière organique, un charbon actif étant présent dans cette matière organique, le charbon actif étant constitué d'au moins un coke micronisé choisi parmi les cokes de charbon, les cokes de pétrole et les cokes de lignites.

2. Papier selon la revendication 1, **caractérisé en ce que** le coke micronisé constituant le charbon actif a une granulométrie comprise entre 5 et 50 microns, dans une proportion comprise de préférence entre 5 et 70% du poids du papier incluant ladite matière organique.

3. Papier selon l'une des revendications 1 ou 2, **caractérisé en ce que** la matière organique comprend un bois torréfié micronisé de granulométrie comprise entre 50 et 150 microns.

4. Papier selon l'une des revendications 1 à 3, **caractérisé en ce que** la matière organique comprend une poudre de résineux.

5. Papier selon l'une des revendications 1 à 4, **caractérisé en ce qu'**il comprend au moins un matériau inorganique dans une proportion de 0,2 à 70 % du poids du papier incluant ladite matière organique et ledit matériau inorganique.

6. Papier selon la revendication 5, **caractérisé en ce que** le matériau inorganique est un produit dérivé de la silice sous forme de poudre.

## Patentansprüche

1. Filterpapier für Flüssigkeiten, das geeignet ist für die Filterung von fettoder paraffinreichen Suspensionen und Emulsionen, wobei dieses Papier über eine hohe Adsorptions- und Absorptionsfähigkeit sowie Porosität verfügt, aus Zellulosefasern besteht und ferner mindestens einen pulverförmigen organischen Stoff enthält, von dem 95 % der Partikel eine Korngröße zwischen 1 und 150 Mikron haben, in einem Verhältnis zwischen 5 und 75 % des Papiergewichts, einschließlich des genannten organischen Stoffs. Dieser organische Stoff enthält eine Aktivkohle, die mindestens aus einem mikronisierten Koks besteht, der unter Steinkohlen-, Petrol- oder Braunkohlenkoks ausgewählt wird.

2. Papier gemäß Anspruch 1, das **dadurch gekennzeichnet ist, dass** der mikronisierte Koks, aus dem die Aktivkohle besteht, eine Korngröße zwischen 5 und 10 Mikron besitzt, in einem Verhältnis von vorzugsweise zwischen 5 und 70 % des Papiergewichts, einschließlich des genannten organischen Stoffs.

3. Papier gemäß einem der Ansprüche 1 oder 2, das **dadurch gekennzeichnet ist, dass** der organische Stoff ein mikronisiertes geröstetes Holz mit einer Korngröße zwischen 50 und 150 Mikron enthält.

4. Papier gemäß einem der Ansprüche 1 bis 3, das **dadurch gekennzeichnet ist, dass** der organische Stoff ein harzhaltiges Pulver enthält.

5. Papier gemäß einem der Ansprüche 1 bis 4, das **dadurch gekennzeichnet ist, dass** es mindestens einen anorganischen Stoff in einem Verhältnis von 0,2 bis 70 % des Papiergewichts, einschließlich des genannten organischen Stoffs und des anorganischen Stoffs, enthält.

6. Papier gemäß Anspruch 5, das **dadurch gekennzeichnet ist, dass** es sich bei dem anorganischen Stoff um ein pulverförmiges Silizium-Derivat handelt.

## Claims

1. A paper for filtering liquids, able to filter suspensions or emulsions with a high content of fats or paraffins, said paper with high adsorption and absorption capacity and with high porosity being based on cellulose fibres and further comprising at least one powdered organic material of which 95 % of the particles have a particle size of between 1 and 150 microns, in a proportion of between 5 and 75 % of the weight of the paper including said organic material, an activated carbon being present in this organic material, the activated carbon being composed of at least one micronised coke selected from carbon cokes, oil cokes and lignite cokes.

2. A paper according to claim 1, **characterised in that** the micronised coke constituting the active carbon has a particle size of between 5 and 50 microns, in a proportion of preferably between 5 and 70 % of the weight of the paper including said organic material.

3. A paper according to either claim 1 or claim 2, **characterised in that** the organic material comprises a micronised roasted wood of a particle size of between 50 and 150 microns.

4. A paper according to any one of claims 1 to 3, **characterised in that** the organic material comprises a resinous powder.

5. A paper according to any one of claims 1 to 4, **characterised in that** it comprises at least one inorganic material in a proportion of 0.2 to 70 % of the weight of the paper including said organic material and said inorganic material.

6. A paper according to claim 5, **characterised in that** said inorganic material is a product derived from silica in the form of a powder.
